# EUROPEAN PATENT SPECIFICATION

(11) **EP 4 172 012 B1**
(45) Date of publication and mention of the grant of the patent: **28.02.2024**
(21) Application number: 20735130.5
(22) Date of filing: 24.06.2020
(51) Int. Cl.: B60T 17/02, F04C 25/02, F04C 28/08

(54) **MOTOR VEHICLE VACUUM PUMP**
KRAFTFAHRZEUG-VAKUUMPUMPE
POMPE À VIDE DE VÉHICULE AUTOMOBILE

(43) Date of publication of application: 03.05.2023
(73) Proprietor: Pierburg Pump Technology GmbH, 41460 Neuss (DE)
(72) Inventor: PIOTROWSKI, Marcel, 41460 Neuss (DE); AL-HASAN, Nabil Salim, 41460 Neuss (DE); RUSS, Stanislaus, 41460 Neuss (DE); SCHULZ, Christian, 41460 Neuss (DE); GRÜNE, Tobias, 41460 Neuss (DE); STEPANOW, Michael, 41460 Neuss (DE)
(74) Representative: terpatent Patentanwälte und European Patent Attorneys ter Smitten Eberlein -Van Hoof
(86) International application number: PCT/EP2020/067663
(87) International publication number: WO 2021/259461

(56) References cited:
- EP-A1- 1 486 673
- EP-A2- 1 314 890
- EP-B1- 1 486 673
- WO-A1-2012/124277
- WO-A1-2016/112441

## Description

The present invention is directed to a motor vehicle vacuum pump, in particular to an electric rotary vane vacuum pump for providing vacuum to a motor vehicle brake booster.

Electric vacuum pumps are driven by an electric motor and are typically used in motor vehicles for providing vacuum to a brake booster of a motor vehicle braking system, in particular for providing vacuum to a vacuum chamber of the brake booster. The electric vacuum pump can be the only vacuum source for the brake booster, or can be used in combination with other vacuum sources as for example an intake system of an internal combustion engine.

The brake booster utilizes the pressure difference between its vacuum chamber pressure and the surrounding atmospheric pressure to enhance a mechanic brake force which is generated by pressing the brake pedal of the motor vehicle and which mechanically actuates the motor vehicle braking system. Providing the brake booster vacuum chamber with an adequate vacuum is therefore crucial to ensure a reliable operation of the brake booster and, as a result, to ensure a reliable and convenient operation of the motor vehicle braking system.

Modern motor vehicle electric vacuum pumps are provided with an electronically commutated electric motor which is free of mechanically abrading brush contacts and which allows an electronical control of its rotational motor speed. This provides a relatively durable and efficient motor vehicle vacuum pump.

Such a motor vehicle vacuum pump is, for example, disclosed in WO 2017/028839 A1. The vacuum pump comprises a pumping unit with a rotatable pump rotor, and an electronically commutated electric motor for driving the pump rotor. The vacuum pump also comprises a pump control unit which provides closed-loop control of a rotational motor speed of the electric motor and therefore ensures a constant rotational motor speed even in case of load and/or supply voltage fluctuations.

However, the pump efficiency and thus the pump performance of such motor vehicle vacuum pumps continuously decreases with increasing total pump operation time because of wear of pump components, in particular wear of the pumping unit. This causes a continuously progressing elongation of the evacuation processes and can even cause an insufficient vacuum in the brake booster vacuum chamber. Motor vehicle vacuum pumps are therefore typically provided with an "oversized" pumping unit to allow to reliably provide a rapid and sufficient evacuation of the brake booster vacuum chamber for a relatively long pump life time. This typically requires relatively expensive pump components/materials which causes a high-priced motor vehicle vacuum pump.

WO 2016/112441 A1 discloses a method for regulating the speed of oil injected or oil free compressor/vacuum element of a compressor/vacuum pump, involving connecting the compressor/vacuum element to a process channel after the speed of the element reaches a preset speed value.

An object of the present invention is therefore to provide a reliable and cost-efficient motor vehicle vacuum pump.

This object is achieved with a motor vehicle vacuum pump with the features of claim 1.

The motor vehicle vacuum pump according to the present invention is provided with a pumping unit with a rotatable pump rotor. Preferably, the vacuum pump is a vane pump wherein the pump rotor comprises a rotor body which is eccentrically arranged in a substantially cylindrical pumping chamber and which comprises several radially slidable rotor vanes. During pump operation, the rotor vanes are in touching radial contact with a pumping chamber sidewall and define several rotating pumping-chamber compartments whose volume varies within one pump rotor revolution.

The motor vehicle vacuum pump according to the present invention is also provided with an electronically commutated electric motor for driving the pump rotor. The electronically commutated electric motor allows to electronically control a rotational motor speed of the electric motor. Typically, the electronically commutated electric motor is energized with a pulse-width-modulated drive energy, wherein an effective electrical drive power and thereby the rotational motor speed is controlled by controlling a duty cycle of the pulse width modulation. Typically, the electric motor comprises an electromagnetic motor stator with at least one stator coil, and comprises a permanent-magnetic motor rotor which is co-rotatably connected with the pump rotor.

The motor vehicle vacuum pump according to the present invention is also provided with a pump control unit which is configured to control the variable rotational motor speed of the electric motor. Preferably, the pump control unit is configured to provide a closed-loop control of the variable rotational motor speed, i.e. the pump control unit is configured to continuously adapt a motor drive power based on a motor-speed feedback signal to realize a desired set motor speed. Typically, the pump control unit is configured to control the rotational motor speed based on a pressure parameter which is provided by a motor vehicle pressure sensor. Typically, the pressure parameter indicates a present negative pressure or, in other words, a present difference pressure of a vacuum chamber of a motor vehicle brake booster relative to a present atmospheric pressure, wherein a greater (positive) pressure parameter indicates a lower absolute vacuum chamber pressure and a lesser (positive) pressure parameter indicates a higher absolute vacuum chamber pressure. The pump control unit is typically configured to switch on the electric motor if the received pressure parameter is below a critical-pressure threshold, and is configured to switch off the electric motor if the pressure parameter is equal to or greater than a target-pressure threshold.

According to the present invention, the pump control unit comprises a speed profile storage which stores an evacuation cycle speed profile with at least one evacuation cycle speed value. Preferably, the evacuation cycle speed profile comprises a plurality of evacuation-parameter-dependent evacuation cycle speed values. The evacuation cycle speed profile can in particular comprise a plurality of pressure-dependent or evacuation-cycle-time-dependent evacuation cycle speed values.

According to the present invention, the pump control unit comprises an evacuation cycle control module which is configured to (closed-loop) control the variable rotational motor speed within an evacuation cycle according to the evacuation cycle speed profile. The evacuation cycle starts when the electric motor is switched on by the pump control unit and ends when the electric motor is switched off by the pump control unit. The evacuation cycle control module is in particular configured to determine a present evacuation cycle speed value based on the evacuation cycle speed profile, and to set a present rotational motor speed of the electric motor corresponding to the present evacuation cycle speed value.

According to the present invention, the pump control unit also comprises a wear compensation control module which is configured to regularly adapt the evacuation cycle speed profile by irreversibly increasing at least one evacuation cycle speed value of the evacuation cycle speed profile each adapting time to thereby gradually increase an average evacuation cycle speed with increasing total pump operation time. The wear compensation control module is in particular configured to determine at least one increased evacuation cycle speed value by adding a respective defined wear-compensating correction value to the at least one evacuation cycle speed value. The wear compensation control module can be configured to adapt the evacuation cycle speed profile by overwriting the at least one evacuation cycle speed value of the evacuation cycle speed profile, i.e. the wear compensation control module irreversibly changes the evacuation cycle speed value which is stored in the speed profile storage.

Alternatively, the wear compensation control module can be configured to adapt the evacuation cycle speed profile by overruling the at least one evacuation cycle speed value with the respective increased evacuation cycle speed value only for setting the rotational motor speed, meaning that the rotational motor speed is set corresponding to the increased evacuation cycle speed value but the increased evacuation cycle speed value is not written to the speed profile storage. In this case, the respective wear-compensating correction value is always added to the original evacuation cycle speed value before setting the rotational motor speed, wherein the wear compensation control module regularly increases the at least one wear-compensating correction value.

In any case, the at least one evacuation cycle speed value is irreversibly increased by the wear compensation control module so that an evacuation cycle speed value which is increased by the wear compensation control module is never decreased by the wear compensation control module again afterwards. The wear compensation control module is configured to regularly increase the at least one evacuation cycle speed value with increasing total pump operation time, meaning that the at least one evacuation cycle speed value is successively increased during pump life time based on a defined pattern. In the present context, the total pump operation time indicates the total elapsed time during which the electric motor has been active. The wear compensation control module according to the present invention therefore provides a successively increasing average evacuation cycle speed with increasing total pump operation time. The increased rotational motor speed provides a higher pump performance compared to the original, non-increased rotational motor speed which allows to compensate the wear-caused pump efficiency decrease with increasing total pump operation time.

The wear compensation control module is preferably configured to increase at least an initial evacuation cycle speed value of the evacuation cycle speed profile to ensure at least a rapid initial evacuation of the brake booster vacuum chamber. More preferably, the wear compensation control module is configured to increase all evacuation cycle speed values of the evacuation cycle speed profile to ensure a substantially invariant evacuation process over the complete pump life time. The wear compensation control module can be configured to increase all evacuation cycle speed values by a common wear-compensating correction value, or, alternatively, can be configured to increase each evacuation cycle speed value by an individual wear-compensating correction value.

The pump control unit according to the present invention allows to reliably compensate the wear-caused pump efficiency decrease without the need of "oversizing" the motor vehicle vacuum pump. This provides a reliable and cost-efficient motor vehicle vacuum pump.

In a preferred embodiment of the present invention, the motor vehicle vacuum pump comprises a pump operation time register which is configured to count a total pump operation time, and comprises a compensation map storage which stores a wear compensation map with total-pump-operation-time-dependent wear-compensating correction values, wherein the wear compensation control module is configured to adapt the evacuation cycle speed profile based on the total pump operation time and the wear compensation map. In the present context, the total pump operation time is the total elapsed time during which the electric motor of the vacuum pump has been active for driving the pump rotor of the pumping unit. The counted total pump operation time can be a "weighted" value which includes a weighting of the motor speeds at which the electric motor has been driven. The total pump operation time can, for example, be a mathematically integration of a motor speed progression over pump life time. The wear compensation map can store a single wear-compensating correction value for each pump operation time which is applied to all evacuation cycle speed values of the evacuation cycle speed profile. Alternatively, the wear compensation map can store a set of wear-compensating correction values for each operation time, wherein each set comprises an individual wear-compensating correction value for each evacuation cycle speed value of the evacuation cycle speed profile. The wear-compensating correction values can either be a difference value which defines the increasement of the respective evacuation cycle speed value, or can be a total value which directly defines the increased evacuation cycle speed value. The wear-compensating correction values are typically determined experimentally. The wear compensation map allows a relatively simple realization of the pump control unit and thus provides a cost-efficient motor vehicle vacuum pump.

It is explicitly noted that the functionality of the evacuation cycle control module and of the wear compensation control module according to the present invention can be realized by a single control-module which controls the variable rotational motor speed based on a single control map which comprises total-pump-operation-time-dependent and evacuation-parameter-dependent wear-compensating speed values.

Preferably, the motor vehicle vacuum pump comprises a pressure sensor connector which is configured to receive a pressure parameter provided by a motor vehicle pressure sensor. Preferably, the vacuum pump is provided with a vehicle-data-bus connector which is configured to provide a data communication with other motor vehicle units via a vehicle data bus system, e.g. via a motor vehicle CAN bus system. In this case, the pressure parameter is typically received via the vehicle data bus system meaning that the pressure sensor connector is defined by the vehicle-data-bus connector. Alternatively, the vacuum pump can be provided with a separate pressure sensor connector for providing a direct electrical connection to the motor vehicle pressure sensor. The pressure parameter can be received via an analog pressure signal whose present amplitude and/or frequency indicates the present pressure parameter, or can be received via a digital signal transmitting a digitally encoded pressure parameter. Generally, the pressure parameter can be received via any kind of signal allowing a parameter transmission.

Typically, the pressure parameter indicates a present negative pressure or, in other words, a present difference pressure of a vacuum chamber of a motor vehicle brake booster relative to a present atmospheric pressure. In this case, a higher pressure parameter indicates a lower absolute vacuum chamber pressure. However, the pressure parameter can also indicate the absolute vacuum chamber pressure. For simplification, in the following description of the present invention, a higher (positive) pressure parameter always indicates a higher vacuum and thus a lower absolute vacuum chamber pressure, and a lower (positive) pressure parameter always indicates a higher vacuum and thus a lower absolute vacuum chamber pressure.

The pump control unit is preferably configured to monitor the pressure parameter and is in particular configured to determine an evacuation cycle final pressure. The evacuation cycle final pressure is the negative/difference pressure indicated by the pressure parameter at the end of the evacuation cycle, i.e. at the time when the electric motor is switched off by the pump control unit. Furthermore, the wear compensation control module is preferably configured to monitor the evacuation cycle final pressure determined by the pump control unit and to adapt the evacuation cycle speed profile based on the evacuation cycle final pressure. The wear compensation control module is in particular configured to increase the at least one evacuation cycle speed value if the evacuation cycle final pressure is lower than an evacuation cycle final pressure target value. Preferably, the wear compensation control module is configured to increase the at least one evacuation cycle speed value only if the evacuation cycle final pressure is lower than the evacuation cycle final pressure target value for a defined number of subsequent evacuation cycles. Preferably, the wear compensation control module is provided with an atmospheric pressure indicator which indicates a present atmospheric pressure, wherein the wear compensation control module is configured to increase the at least one evacuation cycle speed value only if the absolute atmospheric pressure is above a defined atmospheric pressure threshold. The wear compensation control module is thus configured to increase the at least one evacuation cycle speed value for increasing the pump performance if the present pump performance is too low to reach the evacuation cycle final pressure target value. This ensures, despite the wear-caused pump efficiency decrease, a sufficient vacuum at the end of the evacuation cycle and thus provides a reliable motor vehicle vacuum pump.

In a preferred embodiment of the present invention, the motor vehicle vacuum pump comprises an evacuation cycle timer which is configured to measure an evacuation cycle length of the last complete evacuation cycle. The evacuation cycle length is the time elapsed between switching on the electric motor at the beginning of the last evacuation cycle and switching off the electric motor at the end of the last evacuation cycle. The evacuation cycle length therefore indicates the time it takes the vacuum pump to reach the target pressure value after the electric motor has been switched on. The evacuation cycle length is directly dependent on the present pump performance, wherein the evacuation cycle length increases if the pump performance decreases. The wear compensation control module is therefore preferably configured to increase the at least one evacuation cycle speed value if the evacuation cycle length is greater than an evacuation cycle length target value. Preferably, the wear compensation control module is configured to increase the at least one evacuation cycle speed value only if the evacuation cycle length is greater than the evacuation cycle length target value for a defined number of subsequent evacuation cycles. Preferably, the wear compensation control module is provided with an atmospheric pressure indicator which indicates a present atmospheric pressure, wherein the wear compensation control module is configured to increase the at least one evacuation cycle speed value only if the absolute atmospheric pressure is above a defined atmospheric pressure threshold. The wear compensation control module is thus configured to increase the at least one evacuation cycle speed value for increasing the pump performance if the present pump efficiency is too low to achieve the evacuation cycle length target value. This ensures, despite the wear-caused pump efficiency decrease, a stable and fast-enough evacuation process and thus provides a reliable motor vehicle vacuum pump.

Two embodiments of the present invention are described with reference to the enclosed drawings, wherein
figure 1 shows a schematic illustration of a part of a motor vehicle braking system with a motor vehicle brake booster and with a motor vehicle vacuum pump according to a first embodiment of the present invention,
figure 2 shows an exemplary progression of an evacuation cycle speed value as a function of a total pump operation time for the vacuum pump of figure 1,
figure 3 shows the vehicle braking system of figure 1 with a motor vehicle vacuum pump according to a second embodiment of the present invention, and
figure 4 shows possible progressions of an evacuation cycle length and of a first evacuation cycle speed value as a function of a total pump operation time for the vacuum pump of figure 3, and
figure 5 shows possible progressions of an evacuation cycle final pressure and of the first evacuation cycle speed value as a function of a total pump operation time for the vacuum pump of figure 3.

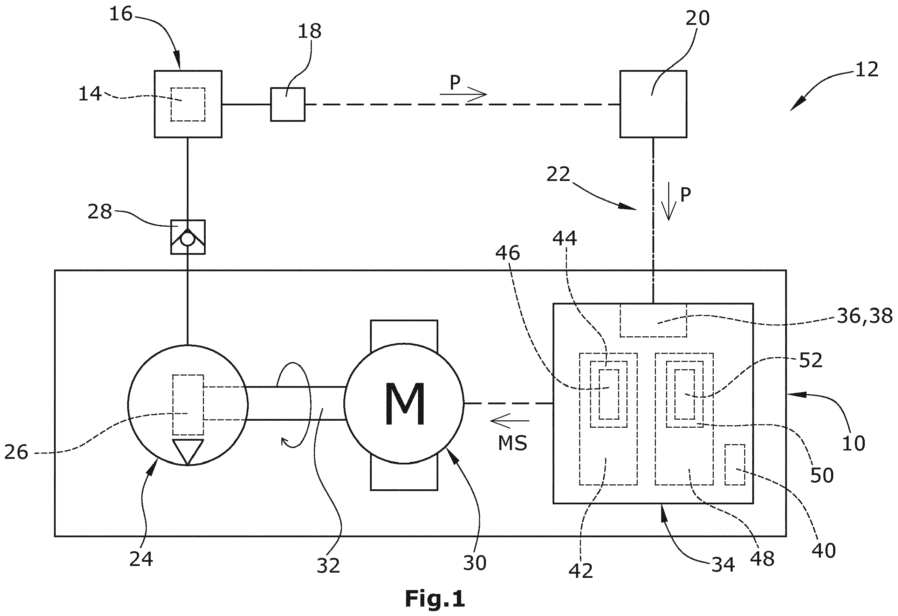

Fig. 1 shows a motor vehicle vacuum pump 10 which is used in a motor vehicle braking system 12 for providing a vacuum to a vacuum chamber 14 of a motor vehicle brake booster 16.

The motor vehicle braking system 12 also comprises a motor vehicle pressure sensor 18 which is fluidically connected to the vacuum chamber 14 and which is configured to measure a vacuum chamber difference pressure relative to atmospheric pressure. The motor vehicle pressure sensor 18 is furthermore configured to provide a pressure parameter P, which indicates the measured vacuum chamber difference pressure, to a motor vehicle control unit 20. The motor vehicle control unit 20 is connected to a vehicle data bus system 22 which is configured to allow a data communication between connected motor vehicle units.

The motor vehicle vacuum pump 10 comprises a pumping unit 24 with a rotatable pump rotor 26. In the present embodiment, the motor vehicle vacuum pump 10 is a rotary vane pump wherein the pump rotor 26 comprises a plurality of rotor vanes which are configured to be radially slidable and to rotate within a substantially cylindrical pumping chamber. The pumping unit 24 is fluidically connected to the vacuum chamber 14 of the motor vehicle brake booster 16 via a check valve 28. The pumping unit 24 is configured to evacuate the vacuum chamber 14.

The motor vehicle vacuum pump 10 also comprises an electronically commutated electric motor 30 which is configured to drive the pump rotor 26 via a rotor shaft 32 which is co-rotatably connected with the pump rotor 26. The electric motor 30 is configure to be operated with a variable rotational motor speed.

The motor vehicle vacuum pump 10 also comprises a pump control unit 34 which is configured to provide a closed-loop control of the variable rotational motor speed of the electric motor 30. The pump control unit 34 is connected to the vehicle data bus system 22 via a vehicle-data-bus connector 36 which is configured to allow a data communication via the vehicle data bus system 22.

In the present embodiment, the pump control unit 34 is configured to periodically read out the pressure parameter P from the motor vehicle control unit 20 via the vehicle data bus system 22. The vehicle-data-bus connector 36 thus defines a pressure sensor connector 38 which is configured to receive the pressure parameter P provided by the motor vehicle pressure sensor 18. In an alternative embodiment, the pump control unit 34 can be directly electrically connected to the motor vehicle pressure sensor 18 via a separate pressure sensor connector.

The pump control unit 34 is configured to control a present rotational motor speed MS of the electric motor 30 based on the pressure parameter P. The pump control unit 34 is in particular configured to switch on the electric motor 30 (MS > 0) if the pressure parameter P is below a critical-pressure threshold, and is configured to switch off the electric motor 30 (MS = 0) if the pressure parameter P is equal to or higher than a target-pressure threshold.

According to the present invention, the pump control unit 34 comprises a pump operation time register 40 which is configured to count a total pump operation time OT. The pump operation time register 40 is in particular configured to continuously count up the total pump operation time OT as long as the electric motor 30 is switched on. The total pump operation time OT thus indicates the total elapsed time during which the pump rotor 26 has been driven by the electric motor 30.

According to the present invention, the pump control unit 34 also comprises an evacuation cycle control module 42 which is configured to actively control a present rotational motor speed MS of the electric motor 30 during an evacuation cycle, i.e. between the switching on and the next switching off of the electric motor 30. The evacuation cycle control module 42 comprises a speed profile storage 44 which stores an evacuation cycle speed profile 46 with a plurality of pressure-dependent evacuation cycle speed values SV. In the present embodiment, the evacuation cycle speed profile 46 comprises three pressure-dependent evacuation cycle speed values SV1,SV2,SV3.

The evacuation cycle control module 42 is configured to determine a present evacuation cycle speed value SVn based on the pressure parameter P and the evacuation cycle speed profile 46. The evacuation cycle control module 42 is furthermore configured to set the present rotational motor speed MS corresponding to the determined present evacuation cycle speed value SVn.

According to the present invention, the pump control unit 34 also comprises a wear compensation control module 48. The wear compensation control module 48 comprises a compensation map storage 50 which stores a wear compensation map 52 with total-pump-operation-time-dependent wear-compensating correction values CV. The wear compensation control module 48 is configured to monitor the total pump operation time OT, and to regularly adapt the evacuation cycle speed profile (46) based on the total pump operation time OT. The wear compensation control module 48 is in particular configured to determine a present wear-compensating correction value CVn based on the total pump operation time OT and the wear compensation map 52. The wear compensation control module 48 is furthermore configured to increase all evacuation cycle speed values SV1,SV2,SV3 of the evacuation cycle speed profile 46 by the present wear-compensating correction value CVn, i.e. each evacuation cycle speed values SV1,SV2,SV3 of the evacuation cycle speed profile 46 is overwritten in the speed profile storage 44 with a respectively increased value to generate an wear-compensating, adapted evacuation cycle speed profile 46. The evacuation cycle speed values SV1,SV2,SV3 and thus the average rotational motor during an evacuation cycle are therefore regularly and irreversibly increased with increasing total pump operation time OT to compensate a wear-caused pump efficiency decrease.

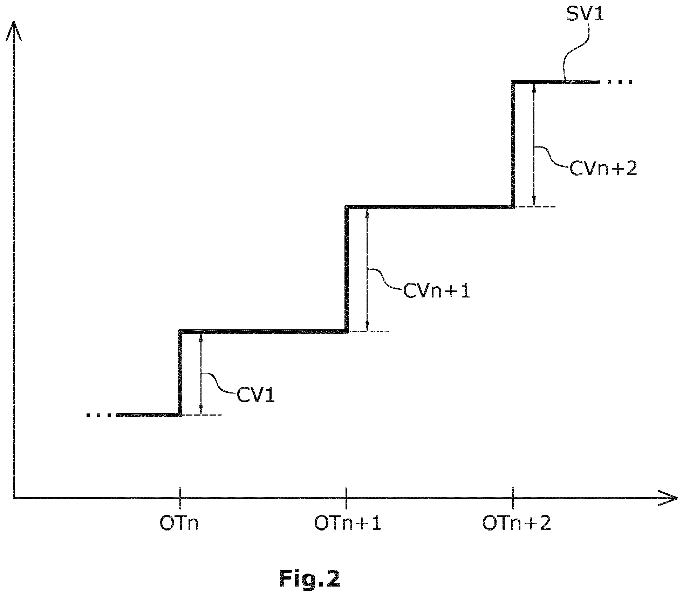

Fig. 2 exemplarily shows the resulting progression of the first evacuation cycle speed value SV1 with increasing total pump operation time OT. The first evacuation cycle speed value SV1 is increased by the wear-compensating correction value CVn at the total pump operation time OTn, is increased by the wear-compensating correction value CVn+1 at the total pump operation time OTn+1, etc.

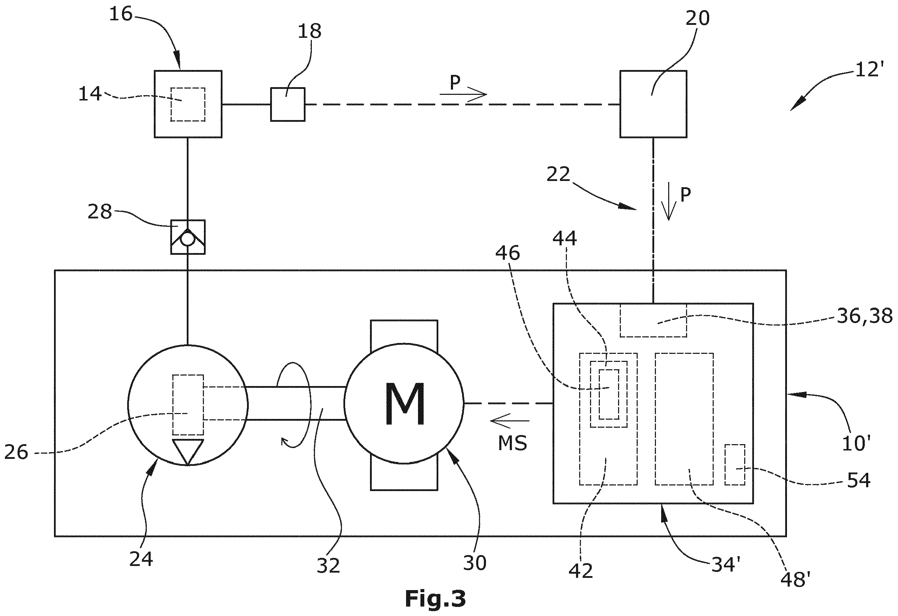

Fig. 3 shows a motor vehicle braking system with an alternative embodiment of the motor vehicle vacuum pump according to the invention. Elements/Features of this motor vehicle braking system which provide the same functionality as the corresponding elements/features of the motor vehicle braking system of figure 1 are provided with the same reference number as in figure 1.

The pump control unit 34' of the motor vehicle vacuum pump 10' comprises an evacuation cycle timer 54 which is configured to measure an evacuation cycle length CL which is the total duration of the last complete evacuation cycle.

The pump control unit 34' is configured to monitor the pressure parameter P and to determine an evacuation cycle final pressure FP which is the difference pressure indicated by the pressure parameter P at the end of the last complete evacuation cycle.

The wear compensation control module 48' is configured to monitor the evacuation cycle length CL and the evacuation cycle final pressure FP, and to regularly adapt the evacuation cycle speed profile 46 based on the evacuation cycle length CL and the evacuation cycle final pressure FP. The wear compensation control module 48' is in particular configured to irreversibly increase all evacuation cycle speed values SV1,SV2,SV3 by a defined wear-compensating correction value CV each time if the evacuation cycle length CL is greater than a defined evacuation cycle length threshold value CLT or if the evacuation cycle final pressure FP is lower than an the evacuation cycle final pressure threshold value FPT. The wear compensation control module 48' is thus configured to regularly adapt the evacuation cycle speed profile 46 (for increasing the pump performance) if the present pump performance is insufficient because of the wear-caused pump efficiency decrease.

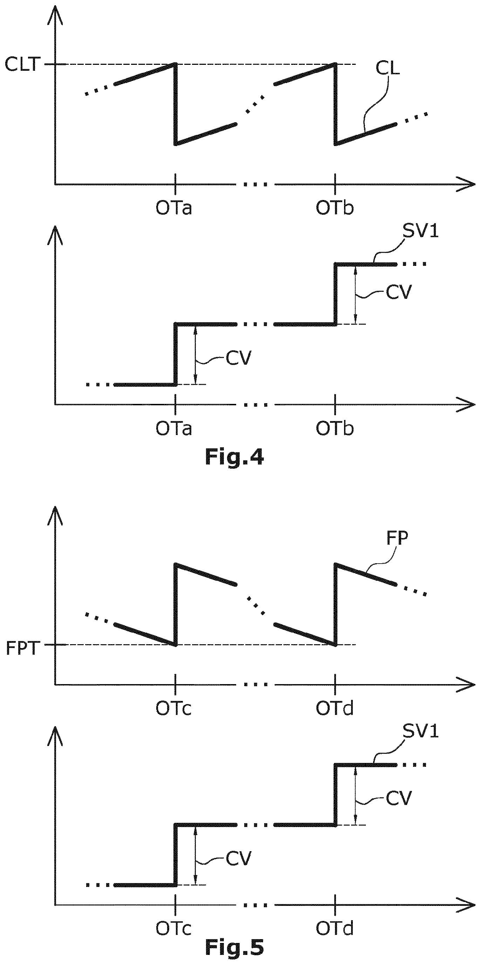

Fig. 4 schematically shows possible progressions of the evacuation cycle length CL and, as an example, of the first evacuation cycle speed value SV1 with increasing total pump operation time OT.

The evacuation cycle length CL increases with increasing total pump operation time OT because of the wear-caused pump efficiency decrease. The evacuation cycle length CL exceeds the evacuation cycle length threshold value CLT at the total pump operation time OTa which causes the wear compensation control module 48' to increase the first evacuation cycle speed value SV1 by the wear-compensating correction value CV. The resulting higher rotational speed of the electric motor 30 increases the pump performance which causes an instant decrease of the evacuation cycle length CL.

The evacuation cycle length CL then increases again because of the wear-caused pump efficiency decrease. The evacuation cycle length CL exceeds the evacuation cycle length threshold value CLT again at the total pump operation time OTb which causes the wear compensation control module 48' to further increase the first evacuation cycle speed value SV1 by the wear-compensating correction value CV again.

Fig. 5 schematically shows possible progressions of the evacuation cycle final pressure FP and, as an example, of the first evacuation cycle speed value SV1 with increasing total pump operation time OT.

The evacuation cycle final pressure FP decreases with increasing total pump operation time OT because of the wear-caused pump efficiency decrease. The evacuation cycle final pressure FP drops below the evacuation cycle final pressure threshold value FPT at the total pump operation time OTc which causes the wear compensation control module 48' to increase the first evacuation cycle speed value SV1 by the wear-compensating correction value CV. The resulting higher rotational speed of the electric motor 30 increases the pump performance which causes an instant increase of the evacuation cycle final pressure FP.

The evacuation cycle final pressure FP then decreases again because of the wear-caused pump efficiency decrease. The evacuation cycle final pressure FP drops below the evacuation cycle final pressure threshold value FPT again at the total pump operation time OTd which causes the wear compensation control module 48' to further increase the first evacuation cycle speed value SV1 by the wear-compensating correction value CV again.

### Reference List

- 10;10': motor vehicle vacuum pump
- 12;12': motor vehicle braking system
- 14: vacuum chamber
- 16: motor vehicle brake booster
- 18: motor vehicle pressure sensor
- 20: motor vehicle control unit
- 22: vehicle data bus system
- 24: pumping unit
- 26: pump rotor
- 28: check valve
- 30: electronically commutated electric motor
- 32: rotor shaft
- 34;34': pump control unit
- 36: vehicle-data-bus connector
- 38: pressure sensor connector
- 40: pump operation time register
- 42: evacuation cycle control module
- 44: speed profile storage
- 46: evacuation cycle speed profile
- 48;48': wear compensation control module
- 50: compensation map storage
- 52: wear compensation map
- 54: evacuation cycle timer

- CL: evacuation cycle length
- CLT: evacuation cycle length threshold value
- CV: wear-compensating correction values
- FP: evacuation cycle final pressure
- FPT: evacuation cycle final pressure threshold value
- MS: present rotational motor speed
- OT: total pump operation time
- P: pressure parameter
- SV: evacuation cycle speed values

## Claims

1. A motor vehicle vacuum pump (10;10'), comprising
- a pumping unit (24) with a rotatable pump rotor (26),
- an electronically commutated electric motor (30) for driving the pump rotor (26), and
- a pump control unit (34;34') for controlling a variable rotational motor speed (MS) of the electric motor (30), **characterised by** the pump control unit (34;34') comprising
- a speed profile storage (44) which stores an evacuation cycle speed profile (46) with at least one evacuation cycle speed value (SV),
- an evacuation cycle control module (42) which is configured to control the variable rotational motor speed (MS) within an evacuation cycle according to the evacuation cycle speed profile (46),
- a wear compensation control module (48;48') which is configured to regularly adapt the evacuation cycle speed profile (46) by irreversibly increasing at least one evacuation cycle speed value (SV) of the evacuation cycle speed profile (46) each adapting time to thereby gradually increase an average evacuation cycle speed with increasing total pump operation time (OT).

2. The motor vehicle vacuum pump (10) according to claim 1, wherein a pump operation time register (40) is provided which is configured to count a total pump operation time (OT), wherein a compensation map storage (50) is provided which stores a wear compensation map (52) with total-pump-operation-time-dependent wear-compensating correction values (CV), and wherein the wear compensation control module (48) is configured to adapt the evacuation cycle speed profile (46) based on the total pump operation time (OT) and the wear compensation map (52).

3. The motor vehicle vacuum pump (10') according to claim 1, wherein a pressure sensor connector (38) is provided which is configured to receive a pressure parameter (P) provided by a motor vehicle pressure sensor (18), wherein the pump control unit (34') is configured to monitor the pressure parameter (P) and to determine an evacuation cycle final pressure (FP), and wherein the wear compensation control module (48') is configured to increase the at least one evacuation cycle speed value (SV) if the evacuation cycle final pressure (FP) is lower than an evacuation cycle final pressure threshold value (FPT).

4. The motor vehicle vacuum pump (10') according to claim 1 or 3, wherein an evacuation cycle timer (54) is provided which is configured to measure an evacuation cycle length (CL) of the last complete evacuation cycle, and wherein the wear compensation control module (48') is configured to increase the at least one evacuation cycle speed value (SV) if the evacuation cycle length is greater than an evacuation cycle length threshold value (CLT).

## Patentansprüche

1. Kraftfahrzeugvakuumpumpe (10; 10'), umfassend
- eine Pumpeinheit (24) mit einem drehbaren Pumpenrotor (26),
- einen elektronisch kommutierten Elektromotor (30) zum Antreiben des Pumpenrotors (26), und
- eine Pumpensteuereinheit (34; 34') zum Steuern einer variablen Motordrehzahl (MS) des Elektromotors (30), **dadurch gekennzeichnet, dass**
die Pumpensteuereinheit (34; 34') umfasst
- einen Drehzahlprofilspeicher (44), der ein Evakuierungszyklusdrehzahlprofil (46) mit mindestens einem Evakuierungszyklusdrehzahlwert (SV) speichert,
- ein Evakuierungszyklussteuermodul (42), das eingerichtet ist, die variable Motordrehzahl (MS) innerhalb eines Evakuierungszyklus gemäß dem Evakuierungszyklusdrehzahlprofil (46) zu steuern,
- ein Verschleißkompensationssteuermodul (48; 48'), das eingerichtet ist, das Evakuierungszyklusdrehzahlprofil (46) regelmäßig anzupassen, indem es bei jedem Anpassungszeitpunkt mindestens einen Evakuierungszyklusdrehzahlwert (SV) des Evakuierungszyklusdrehzahlprofils (46) irreversibel erhöht, um dadurch eine durchschnittliche Evakuierungszyklusdrehzahl mit zunehmender Gesamtpumpenbetriebszeit (OT) schrittweise zu erhöhen.

2. Kraftfahrzeugvakuumpumpe (10) nach Anspruch 1, wobei ein Pumpenbetriebszeitregister (40) vorhanden ist, das eingerichtet ist, eine Gesamtpumpenbetriebszeit (OT) zu zählen, wobei ein Kompensationskennfeldspeicher (50) vorhanden ist, der ein Verschleißkompensationskennfeld (52) mit gesamtpumpenbetriebszeitabhängigen Verschleißkompensationskorrekturwerten (CV) speichert, und wobei das Verschleißkompensationssteuermodul (48) eingerichtet ist, das Evakuierungszyklusdrehzahlprofil (46) basierend auf der Gesamtpumpenbetriebszeit (OT) und dem Verschleißkompensationskennfeld (52) anzupassen.

3. Kraftfahrzeugvakuumpumpe (10') nach Anspruch 1, wobei ein Drucksensoranschluss (38) vorhanden ist, der eingerichtet ist, einen von einem Kraftfahrzeugdrucksensor (18) bereitgestellten Druckparameter (P) zu empfangen, wobei die Pumpensteuereinheit (34') eingerichtet ist, den Druckparameter (P) zu überwachen und einen Evakuierungszyklusenddruck (FP) zu bestimmen, und wobei das Verschleißkompensationssteuermodul (48') eingerichtet ist, den mindestens einen Evakuierungszyklusdrehzahlwert (SV) zu erhöhen, wenn der Evakuierungszyklusenddruck (FP) niedriger ist als ein Evakuierungszyklusenddruckschwellenwert (FPT).

4. Kraftfahrzeugvakuumpumpe (10') nach Anspruch 1 oder 3, wobei ein Evakuierungszyklustimer (54) vorgesehen ist, der eingerichtet ist, eine Evakuierungszykluslänge (CL) des letzten vollständigen Evakuierungszyklus zu messen, und wobei das Verschleißkompensationssteuermodul (48') eingerichtet ist, den mindestens einen Evakuierungszyklusdrehzahlwert (SV) zu erhöhen, wenn die Evakuierungszykluslänge größer ist als ein Evakuierungszykluslängenschwellenwert (CLT).

## Revendications

1. Une pompe à vide de véhicule moteur (10;10'), qui comprend
- une unité de pompage (24) avec un rotor de pompe rotatif (26),
- un moteur électrique à commutation électronique (30) pour entraîner le rotor de la pompe (26), et
- une unité de contrôle de la pompe (34;34') pour contrôler une vitesse de rotation moteur (MS) variable du moteur électrique (30), **caractérisée par**
- l'unité de contrôle de la pompe (34;34') comprend
- une mémoire de profil de vitesse (44) qui mémorise un profil de vitesse de cycle d'évacuation (46) avec au moins une valeur de vitesse de cycle d'évacuation (SV),
- un module de contrôle du cycle d'évacuation (42) qui est configuré pour contrôler la vitesse de moteur rotatif variable (MS) au sein d'un cycle d'évacuation en fonction du profil de vitesse du cycle d'évacuation (46),
- un module de contrôle de compensation d'usure (48;48') configuré pour adapter régulièrement le profil de vitesse du cycle d'évacuation (46) en augmentant de manière irréversible au moins une valeur de vitesse du cycle d'évacuation (SV) du profil de vitesse du cycle d'évacuation (46) à chaque temps d'adaptation pour augmenter ainsi progressivement une vitesse moyenne du cycle d'évacuation avec l'augmentation de la durée totale de fonctionnement de la pompe (OT).

2. La pompe à vide de véhicule moteur (10) selon la revendication 1, dans laquelle un registre de temps de marche de la pompe (40) est fourni qui est configuré pour compter un temps de marche total de la pompe (OT), dans laquelle une mémoire de carte de compensation (50) est fournie qui mémorise une carte de compensation d'usure (52) avec des valeurs de correction de compensation d'usure (CV) dépendant du temps de marche total de la pompe, et dans laquelle le module de contrôle de compensation d'usure (48) est configuré pour adapter le profil de vitesse de cycle d'évacuation (46) sur la base du temps de marche total de la pompe (OT) et de la carte de compensation d'usure (52).

3. La pompe à vide de véhicule moteur (10') selon la revendication 1, dans laquelle un connecteur de capteur de pression (38) est fourni qui est configuré pour recevoir un paramètre de pression (P) fourni par un capteur de pression de véhicule moteur (18), dans laquelle l'unité de contrôle de pompe (34') est configurée pour surveiller le paramètre de pression (P) et pour déterminer une pression finale de cycle d'évacuation (FP), et dans lequel le module de contrôle de la compensation d'usure (48') est configuré pour augmenter la au moins une valeur de vitesse du cycle d'évacuation (SV) si la pression finale du cycle d'évacuation (FP) est inférieure à une valeur seuil de pression finale du cycle d'évacuation (FPT).

4. La pompe à vide de véhicule moteur (10') selon la revendication 1 ou 3, dans laquelle un compteur de cycle d'évacuation (54) est fourni qui est configuré pour mesurer une longueur de cycle d'évacuation (CL) du dernier cycle d'évacuation complet, et dans laquelle le module de contrôle de compensation d'usure (48') est configuré pour augmenter la au moins une valeur de vitesse de cycle d'évacuation (SV) si la longueur de cycle d'évacuation est supérieure à une valeur de seuil de cycle d'évacuation (CLT).
